# EUROPEAN PATENT SPECIFICATION

(11) **EP 3 506 664 B1**
(45) Date of publication and mention of the grant of the patent: **27.07.2022**
(21) Application number: 18192479.6
(22) Date of filing: 30.06.2012
(51) Int. Cl.: H04W 4/24, H04M 15/00, H04L 12/14

(54) **GATEWAY CHARGING METHOD, GATEWAY AND SYSTEM**
GATEWAY-LADEVERFAHREN, GATEWAY UND SYSTEM
PROCÉDÉ, PASSERELLE ET SYSTÈME DE FACTURATION DE PASSERELLE

(43) Date of publication of application: 03.07.2019
(62) Divisional of application: 12879847.7
(73) Proprietor: HUAWEI TECHNOLOGIES CO., LTD., Shenzhen, Guangdong 518129 (CN)
(72) Inventor: CAI, Hui, Shenzhen, Guangdong 518129, P.R. (CN); TAN, Shiyong, Shenzhen, Guangdong 518129, P.R. (CN); NI, Hui, Shenzhen, Guangdong 518129, P.R. (CN)
(74) Representative: Epping - Hermann - Fischer

(56) References cited:
- EP-A1- 2 466 932
- WO-A1-2011/085543
- CN-C- 100 544 266
- US-A1- 2009 264 097

## Description

### TECHNICAL FIELD

The present invention relates to the field of communications, and in particular, to a gateway charging method, gateway and system.

### BACKGROUND

With the development of mobile Internet services, the enrichment of enterprise network services, and the convergence of mobile access networks of a variety of standards, a gateway is required to develop towards a direction of more refined service control and charging on the basis of completion of basic data forwarding functions, so as to support implementation and control of richer services of an operator.

However, in the development of a gateway towards the direction of more refined service control and charging, because adopted platforms are different, the development has different focuses. A general purpose computing platform is more suitable for processing control signaling of mobility management, session management and so on, so the development focuses on control processing of services; while a router platform formed of dedicated hardware has very strong performance in handling data forwarding on a user plane, which is generally more than ten times the capability of a general purpose computing platform, but this type of platform has weak performance in processing signaling. Therefore, in the prior art, if the development of a gateway focuses on improving a user data forwarding throughput, it is difficult to ensure the development towards the direction of more refined service control and charging; on the contrary, if the development of a gateway focuses on the development towards the direction of more refined service control and charging, it is difficult to ensure the improvement of the user data forwarding throughput. Therefore, there is a bottleneck in the development of gateway charging.

EP 2466932 A1 describes an approach to charging which is arranged between the MME and a gateway. WO 2011/085543 A1 describes the use of trigger events in charging.

### SUMMARY

Embodiments of the present invention provide a gateway charging method and a gateway, which can lower information transmission amount between two sub-gateways obtained by dividing gateway . The present invention is defined by the appended independent claims. Dependent claims constitute embodiments of the invention. Although the invention is only defined by the claims, the below embodiments, examples and aspects are only present for the sole purpose in aiding in understanding the background and advantages of the invention.

In order to achieve the foregoing objectives, embodiments of the present invention adopt the following technical solutions:

In one aspect, a gateway charging method is provided, where a gateway is divided into a first sub-gateway and a second sub-gateway, the first sub-gateway is configured to process a charging policy and control the second sub-gateway, the second sub-gateway is configured to forward data and collect charging information, and the method includes:
receiving, by the second sub-gateway, a first message sent by the first sub-gateway, where the first message indicates a charging policy of an access user;
collecting, by the second sub-gateway, charging information of the access user according to the charging policy indicated by the first message; and
sending, by the second sub-gateway, a second message to the first sub-gateway, where the second message carries the charging information.

In one aspect, a gateway charging method is provided, where a gateway is divided into a first sub-gateway and a second sub-gateway, the first sub-gateway is configured to process a charging policy and control the second sub-gateway, the second sub-gateway is configured to forward data and collect charging information, and the method includes:
determining, by the first sub-gateway, a charging policy of an access user according to gateway configuration or information of the access user;
sending, by the first sub-gateway, a first message to the second sub-gateway, where the first message indicates the charging policy, so that the second sub-gateway collects charging information according to the charging policy; and
receiving, by the first sub-gateway, a second message sent by the second sub-gateway, where the second message carries the charging information.

In another aspect, a gateway is provided, where the gateway is divided into a first sub-gateway and a second sub-gateway, the first sub-gateway is configured to process a charging policy and control the second sub-gateway, the second sub-gateway is configured to forward data and collect charging information, and the second sub-gateway includes:
a second receiving unit, configured to receive a first message from the first sub-gateway, wherein the first message indicates a charging policy of an access user;
a second processing unit, configured to collect charging information of the access user according to the charging policy indicated by the first message; and
a second sending unit, configured to send a second message to the first sub-gateway, where the second message carries the charging information collected by the second processing unit.

In another aspect, a first sub-gateway is provided, where the gateway is divided into a first sub-gateway and a second sub-gateway, the first sub-gateway is configured to process a charging policy and control the second sub-gateway, the second sub-gateway is configured to forward data and collect charging information, and the first sub-gateway includes:
a first processing unit, configured to determine a charging policy of an access user according to gateway configuration or information of the access user;
a first sending unit, configured to send a first message to the second sub-gateway, where the first message indicates the charging policy determined by the first processing unit, so that the second sub-gateway collects charging information according to the charging policy; and
a first receiving unit, configured to receive a second message sent by the second sub-gateway, where the second message carries the charging information.

In another aspect, a charging system is provided. The system comprises a first sub-gateway and a second sub-gateway, wherein the first sub-gateway is configured to process a charging policy and control the second sub-gateway, and the second sub-gateway is configured to forward data and collect charging information,
wherein the first sub-gateway is configured to send a first message to the first sub-gateway, wherein the first message indicates a charging policy of an access user;
wherein the second sub-gateway is configured to receive the first message from the first sub-gateway; collect charging information of the access user according to the charging policy indicated by the first message; and send a second message to the first sub-gateway, wherein the second message carries the charging information; and
wherein the first sub-gateway is configured to receive the second message from the second sub-gateway.

According to the gateway charging method and the gateway provided by the embodiments of the present invention, the first sub-gateway determines a charging policy of an access user, and sends a first message indicating the charging policy to the second sub-gateway; the second sub-gateway receives the first message, and then collects charging information according to the first message, and sends a second message carrying the charging information to the first sub-gateway; and the first sub-gateway receives the second message. In this way, the first sub-gateway can merely process the charging information and control the second sub-gateway, while the second sub-gateway can merely measure data and send a measurement result. Messages indicating required charging information and carrying the collected charging information are sent between the first sub-gateway and the second sub-gateway, so that multiple contents such as charging condition information and charging control information does not need to be transferred, thereby lowering transmission amount of charging information between two sub-gateway interfaces.

### BRIEF DESCRIPTION OF DRAWINGS

To illustrate the technical solutions according to the embodiments of the present invention or in the prior art more clearly, accompanying drawings required for describing the embodiments or the prior art are introduced below briefly. Apparently, the accompanying drawings in the following descriptions merely show some of the embodiments of the present invention, and persons of ordinary skill in the art can obtain other drawings according to the accompanying drawings without creative efforts.
FIG. 1 is a schematic flow chart of a second gateway charging method according to an embodiment of the present invention;
FIG. 2 is a schematic flow chart of a first sub-gateway charging method according to an embodiment of the present invention;
FIG. 3 is a schematic flow chart of a gateway charging method according to another embodiment of the present invention;
FIG. 4 is a schematic flow chart of a gateway charging method according to another embodiment of the present invention;
FIG. 5 is a schematic structural diagram of a gateway according to an embodiment of the present invention;
FIG. 6 is a schematic structural diagram of a second sub-gateway according to an embodiment of the present invention;
FIG. 7 is a schematic structural diagram of a first sub-gateway according to an embodiment of the present invention; and
FIG. 8 is a schematic structural diagram of a first sub-gateway according to an embodiment of the present invention.

### DESCRIPTION OF EMBODIMENTS

The technical solutions in the embodiments of the present invention will be clearly and completely described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

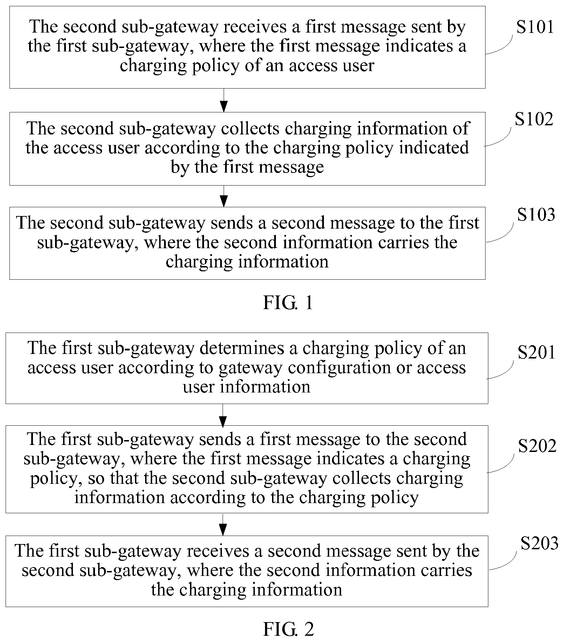

According to a gateway charging method provided by an embodiment of the present invention, a gateway is divided into a first sub-gateway and a second sub-gateway, the first sub-gateway is configured to process a charging policy and control the second sub-gateway, and the second sub-gateway is configured to forward data. As shown in FIG. 1, the method is a method for a second sub-gateway side, and the method includes:
S101: The second sub-gateway receives a first message sent by the first sub-gateway, where the first message indicates a charging policy of an access user.

It should be noted that, in a 3GPP (The 3rd Generation Partnership Project, the 3rd generation partnership project) system, when maintaining a control plane service and a data forwarding service, the two sub-gateways need to transfer, to each other, a large amount of charging condition information, such as QoS (Quality of Service, quality of service), and charging control information, such as related content information such as reporting threshold and envelope, thereby increasing charging information content transferred between the two sub-gateway interfaces after the gateway is decoupled, and increasing a load of charging function processing in the gateway.

For example, dividing the gateway into the first sub-gateway and the second sub-gateway may be dividing a UGW (Unified Gateway, unified gateway) into a forwarding plane and a control plane, for example, splitting the UGW's functionalities into two parts, that is, a UGW-C (Unified Gateway Control plane, unified gateway control plane) and a UGW-U (Unified Gateway User plane, unified gateway user plane), where the first sub-gateway may be the UGW-C, and the second gateway may be the UGW-U. The UGW-C is mainly to complete user access, policy control and charging CDR management, and the UGW-U is mainly in charge of forwarding data and executing a control and charging policy delivered by the control plane.

Further, the first message may be an identifier, for example, an identifier indicating a corresponding charging policy of an access user in a preset charging policy, where the preset charging policy may be mutually agreed by the first sub-gateway and the second sub-gateway, a same identifier corresponds to a same charging policy list, for example, a first preset charging policy is set in the first sub-gateway, and a second preset sub-gateway is set in the second sub-gateway, where a first preset policy and a second preset policy merely need to set a same identifier corresponding to a same charging policy, and are not required to be the same. For example, the first preset charging policy may have several preset policies more than the second preset charging policy, or the charging policy sequence in the first preset charging policy is not the same as that in the second preset charging policy. In this embodiment, merely a situation that the first preset charging policy and the second preset charging policy are the same is taken as an example, which, however, does not serve as a limitation. The first preset charging policy and the second preset charging policy are shown in Table 1.

**Table 1**

| Charging Policy | Identifier |
|---|---|
| Call duration under roaming charging | 1100 |
| Traffic volume under traffic-based charging | 1101 |
| Call duration of free incoming calls | 1010 |

If the first message indicates call duration under roaming charging, the first message may be an identifier 1101, so when the first message received by second sub-gateway and sent by the first sub-gateway is 1101, the second sub-gateway can know that charging information of the call duration under roaming charging needs to be measured. In addition, the identifier may also be a name, for example, "call duration under roaming charging" or another value or other information signs, and is not limited to examples listed in Table 1. Further, the identifier may also be a context identifier or an entry identifier, so that the second sub-gateway can search context or entries by using the identifier as an index, so as to measure charging information needing to be collected.

Optionally, the first message may further be an entry including a charging policy, for example, the first message may be

| |
|---|
| Call duration under roaming charging |

It should be noted that, only an entry is taken as an example herein, but the present invention is not limited to the item of the entry.

Further, an access user corresponding to the identifier or the entry can be determined according to a matching value in the identifier or the entry, so the entry may not indicate the access user, but the second sub-gateway and the first sub-gateway determine the access user according to the matching value, so as to know that the indicated charging policy and the measured and responded charging information are for the same access user.

S102: The second sub-gateway collects charging information of the access user according to the charging policy indicated by the first message.

It should be noted that, if the first message received by the second sub-gateway is an identifier, the second sub-gateway determines, according to a second preset charging policy that is preset by the second sub-gateway and the first sub-gateway, a charging policy that needs to be measured, so as to collect the charging information; or, the second sub-gateway searches known context or entry collection charging policies in the first sub-gateway and the second sub-gateway by using the identifier as an index, so as to execute the charging policy and collect the charging information; and if the first message received by the second sub-gateway is an entry, the second sub-gateway collects the charging information according to the charging policy in the entry.

Further, if the first message is an entry, and a charging policy in the entry is no-charging or the entry is just empty, the second sub-gateway determines to execute a charging policy of no-charging.

S103: The second sub-gateway sends a second message to the first sub-gateway, where the second information carries the charging information.

It should be noted that, the second message feeds back the collected charging information to the first sub-gateway, so that the first sub-gateway finds the charging policy according to the charging information and a matching value of the charging information, and when a user or another external device requests, the first sub-gateway generates a CDR according to the charging policy, and feeds back the CDR to the user or the external device.

According to a gateway charging method provided by an embodiment of the present invention, a gateway is divided into a first sub-gateway and a second sub-gateway, the first sub-gateway is configured to process a charging policy and control the second sub-gateway, and the second sub-gateway is configured to forward data. As shown in FIG. 2, the method is a method for a first sub-gateway side, and the method includes:
S201: The first sub-gateway determines a charging policy of an access user according to gateway configuration or information of the access user.

It should be noted that, the first sub-gateway is a UGW-C. The UGW-C determines a charging policy of an access user that needs to be measured, according to the gateway configuration, that is, according to a charging policy corresponding to a user, a bearer and a service that is statically configured on a gateway; or when a user and a service are activated, the UGW-C obtains information of the access user in real time and determines a charging policy of an access user that needs to be measured.

S202: The first sub-gateway sends a first message to the second sub-gateway, where the first message indicates a charging policy, so that the second sub-gateway collects charging information according to the charging policy.

It should be noted that, the first message may be an identifier corresponding to an access user in a first preset charging policy, for example, the identifier may be an identifier of a corresponding charging policy in a preset charging policy list, so that the second sub-gateway queries a second preset charging policy according to the identifier, so as to collect a charging policy; the first message may also be an identifier of a corresponding charging policy in a context or an identifier of a corresponding charging policy in an entry; in addition, the first message may also be an entry, for example, an entry including a charging policy. It should be noted that, because the first message sent by the first sub-gateway to the second sub-gateway is the same as the first message received by the second sub-gateway, the method for collecting a charging policy according to the first message has been described in the foregoing embodiment, so details are not described herein again.

S203: The first sub-gateway receives a second message sent by the second sub-gateway, where the second information carries the charging information.

According to the gateway charging method provided by the embodiment of the present invention, the first sub-gateway determines a charging policy of an access user, and sends a first message indicating the charging policy to the second sub-gateway; the second sub-gateway receives the first message, and then collects charging information according to the first message, and sends a second message carrying the charging information to the first sub-gateway; and the first sub-gateway receives the second message. In this way, the first sub-gateway can merely process the charging information and control the second sub-gateway, while the second sub-gateway can merely measure data and send a measurement result. Messages indicating required charging information and carrying the collected charging information are sent between the first sub-gateway and the second sub-gateway, so that multiple contents such as charging condition information and charging control information does not need to be transferred, thereby lowering transmission amount of charging information between two sub-gateway interfaces.

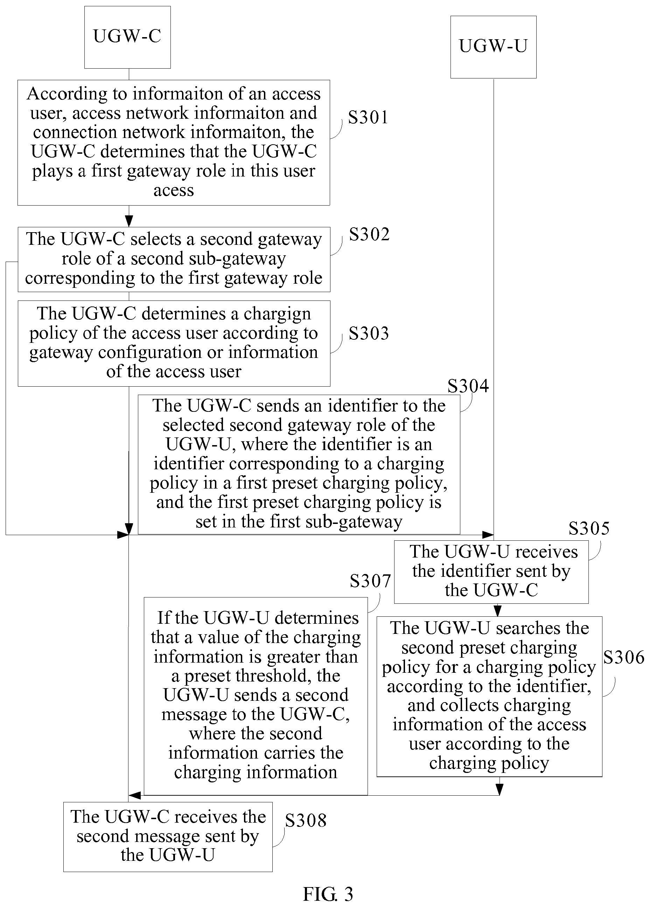

According to a gateway charging method provided by another embodiment of the present invention, as shown in FIG. 3, in this embodiment, a situation that a gateway is a UGW, a first sub-gateway is a UGW-C, and a second sub-gateway is a UGW-U is taken as an example, which, however, does not serve as a limitation. The method includes:
S301: According to user information of an access user, access network information and connection network information, the UGW-C determines that the UGW-C plays a first gateway role in this time of user access.

It should be noted that, the user information of the access user includes that a user is in a roaming state or that a user is in a local non-roaming state; the connection network information includes LBO (Local Break Out, local break out) or Home-routed attribution routing, where the LBO refers to that an access user is in a roaming area and data traffic comes out from the roaming area; while the Home-routed refers to that an access user is in a roaming area and data traffic returns back to the home location from the roaming area and then comes out from the home location. The role that the UGW-C plays in this time of user access may be a GGSN (Gateway GPRS Support Node, gateway general packet radio service support node), an SGW (Serving Gateway, serving gateway), a PGW (Packet Data Network Gateway, packet data network gateway) or an SGW+PGW (Packet Data Network Gateway+ Packet Data Network Gateway, serve as a serving gateway and a packet data network gateway).

S302: The UGW-C selects a second gateway role of a second sub-gateway corresponding to the first gateway role.

For example, according to that the first gateway role that the UGW-C plays in this time of user access, the UGW-U selects a corresponding second gateway role. If the first gateway role of the UGW-C is an SGW this time, after being connected to a PGW through an interface, a second role of the UGW-U is selected to be an SGW. Alternatively, when the first role of the UGW-C is a GGSN or an SGW+PGW, a second role of the UGW-U is selected to be a GGSN, a PGW or an SGW+PGW.

It should be noted that S303 has no sequence relationship with S301 and S302, and S301, S302 and S303 may be performed in sequence, and may also be performed at the same time, or S303 may be performed first, and then S301 and S302 is performed.

S303: The UGW-C determines a charging policy of the access user according to gateway configuration or information of the access user.

S304: The UGW-C sends an identifier to the selected second gateway role of the UGW-U, where the identifier is an identifier corresponding to a charging policy in a first preset charging policy, and the first preset charging policy is set in the first sub-gateway.

It should be noted that, as shown in Table 2, before the UGW-C sends the identifier to the UGW-U, a preset charging policy is configured in the UGW-C and the UGW-U, where a first preset charging policy is set in the UGW-C and a second preset charging policy is set in the UGW-U, the relationship between the first preset charging policy and the second preset charging policy has been described in the foregoing embodiment, so details are not described herein again. Further, the first preset charging policy and the second preset charging policy set an identifier corresponding to a charging policy in the preset charging policy according to a common agreement. The charging policy may be individually managed on the UGW-C and the UGW-U, that is, the charging policy may be merely traffic or call duration; and may also be combined with a control policy such as QoS, that is, the charging policy may be different traffics according to the current quality of service such as bandwidth and delay. The set identifier may be an ID (Identifier, identifier) value, an ID name or other information signs corresponding to the charging policy in the preset charging policy.

**Table 2**

| Charging Policy | Identifier |
|---|---|
| Call duration under roaming charging | 1000 |
| Traffic volume when the bandwidth is 2M | 1001 |
| Call duration of free incoming calls | 1010 |

Further, the identifier may also be identities corresponding to different charging policies in context stored in the access user, a bearer and service information, for the UGW-C to search for a charging policy. Herein, a situation that the identifier is a corresponding binary code of a charging policy in the first preset charging policy is taken as an example for illustration, and when the identifier is a context identifier or an entry identifier, the charging policy may also be searched for according to mapping, which, however, does not serve as a limitation.

Preferably, when the UGW-C needs to update control information such as the Qos or charging, the UGW-C may select a new identifier corresponding to the updated charging policy that needs to be measured, and sends the new identifier to the UGW-U, so that the UGW-U updates measurement according to the new identifier.

S305: The UGW-U receives the identifier sent by the UGW-C.

It should be noted that, because the charging policy in the first preset charging policy and the charging policy in the second preset charging policy correspond to the same identifier, the identifier is the identifier corresponding to the charging policy in the first preset charging policy, the UGW-U may search the second preset charging policy such as Table 2 for a desired charging policy according to the identifier, and measure and collect charging information. For example, when the identifier is "1001", the UGW-U measures the traffic volume when the bandwidth is 2M. Further, if the identifier is a context identifier, the UGW-U searches a context to measure charging information.

S306: The UGW-U searches the second preset charging policy for a charging policy according to the identifier, and collects charging information of the access user according to the charging policy.

For example, as shown in Table 2, if the identifier "1001", the UGW-U measures the traffic volume, and if the identifier is "1010" or "1000", the UGW-U measures the call duration; a difference is that, if the identifier "1010", the UGW-U measures the call duration of free calls, and if the identifier is "1000", the UGW-U measures the call duration under roaming charging.

It should be noted that, the charging information collected by the UGW-U according to the charging policy indicated by the first message is charging or not collecting the charging information. When the first role of the UGW-C is an SGW, and the UGW-C is connected to a PGW through an S5 interface, the UGW-C may determine that the UGW-U performs no-charging processing, where the first message may indicate that the charging policy of the access user is not performing charging, or the first message may not indicate a charging policy, and the UGW-U does not collect charging information according to the charging policy indicated by the first message; and if the first role of the UGW-C is an SGW, and the UGW-C is connected to a PGW through an S8 interface, the UGW-C may determine that the UGW-U performs roaming charging, and the UGW-U collects charging information according to the charging policy indicated by the first message. Further, according to provisions on the S5 interface and the S8 interface in the 3GPP protocol, when the UGW-C is connected to a PGW through an S5 interface, charging may not be performed, and when the UGW-C is connected to a PGW through an S8 interface, roaming charging is performed, so that the UGW-C can determine to charge or not to charge, so as to send a first message to indicate the UGW-C of collecting or not collecting charging information, but the present invention is not limited this determination method.

Preferably, when the UGW-C needs to update the control information such as the QoS or charging, the UGW-C may select a new identifier corresponding to the updated charging policy, and send the new identifier to the UGW-U; and the UGW-U receives the new identifier, and updates the measured charging information according to a charging measure corresponding to the new identifier.

S307: If the UGW-U determines that a value of the charging information is greater than a preset threshold, the UGW-U sends a second message to the UGW-C, where the second information carries the charging information.

For example, the preset threshold may be a measured traffic reaching 60M, and may also be call duration exceeding 120min. For example, when the charging information is 60.1M, the UGW-U sends a second message carrying a traffic volume of 60.1M to the UGW-C. Setting the preset threshold can reduce the number of times that the UGW-U sends the second message to the UGW-C, so as to reduce information exchange between the UGW-U and UGW-C, thereby lowering a load of charging processing.

Further, if the UGW-U does not collect charging information, the UGW-U may send a second message not carrying charging information to the UGW-C, so as to notify the UGW-C that charging information of the access user is not collected; or the UGW-U does not send a second message to the UGW-C.

S308: The UGW-C receives the second message sent by the UGW-U.

It should be noted that, the UGW-C collects charging information according to the received second message and processes the charging information. For example, the second message includes the identifier and charging information sent to the UGW-U by the UGW-C, the UGW-C searches the first preset charging policy by using the identifier as an index, and fills the found charging policy information in the context; and when the UGW-C needs to generate a CDR record, a charging unit of the UGW-C reads information in the context, and generates a CDR. Further, if the identifier is an identifier indicating a context corresponding to the charging policy, the UGW-C searches context by using the identifier as an index, and fills the charging policy information in the context, and when the UGW-C needs to generate a CDR record, a charging unit of the UGW-C reads information in the context, and generates a CDR.

It should be noted that, the identifier and the second message may carry a matching value, and the matching value may indicate a matching position corresponding to the charging policy, so that the UGW-C and the UGW-U obtain user information, and the UGW-C and the UGW-U know to perform control and data forwarding on the same user; or, the identifier and the second message may carry a user ID, so that the UGW-C and the UGW-U obtain user information, and the UGW-C and the UGW-U know to perform control and data forwarding on the same user.

According to the gateway charging method provided by the embodiment of the present invention, the UGW-C determines a charging policy of an access user, and sends a first message indicating the charging policy to the UGW-U; the UGW-U receives the first message, and then collects charging information according to the first message, and sends a second message carrying the charging information to the UGW-C; and the UGW-C receives the second message. In this way, the UGW-C can merely process the charging information and control the UGW-U, while the UGW-U can merely measure data and send a measurement result. Messages indicating required charging information and carrying the collected charging information are sent between the UGW-C and the UGW-U, so that multiple contents such as charging condition information and charging control information does not need to be transferred, thereby lowering transmission amount of charging information between two sub-gateway interfaces.

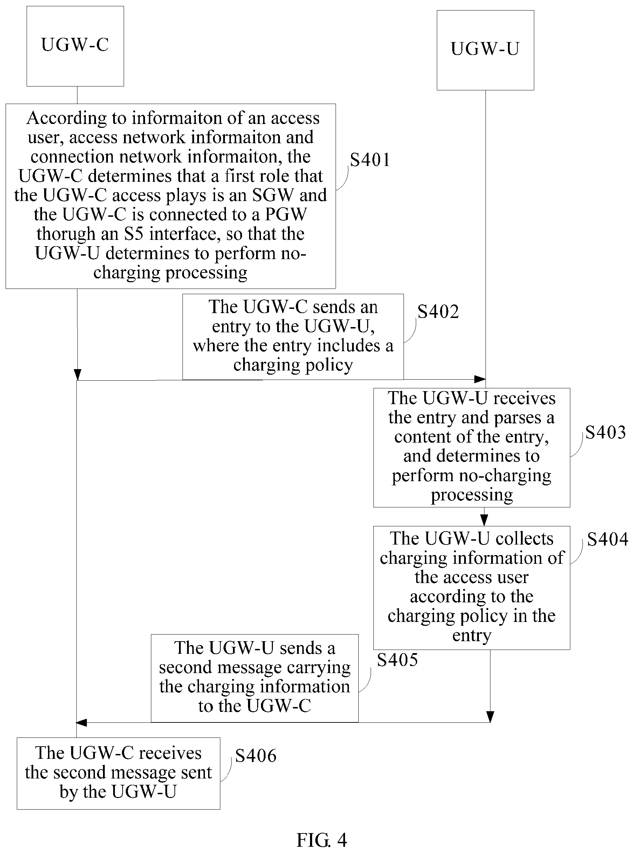

According to a gateway charging method provided by another embodiment of the present invention, as shown in FIG. 4, in this embodiment, a situation that a first sub-gateway is a UGW-C, and a second sub-gateway is a UGW-U is taken as an example, which, however, does not serve as a limitation, and the method includes:
S401: According to information of an access user, access network information and connection network information, the UGW-C determines that a first role that the UGW-C access plays is an SGW and the UGW-C is connected to a PGW through an S5 interface, so that the UGW-U determines to perform no-charging processing.

According to information of an access user, access network information and connection network information, the UGW-C determines that the first role that the UGW-C access plays may also be an PGW or a GGSN, and in this embodiment, merely a situation that when the first role that the UGW-C plays is an SGW, and the UGW-C is connected to a PGW through an S5 interface, the UGW-C determines that the UGW-U does not collect charging information of the access user is taken as an example for illustration, and situations that the UGW-U determines, according to other manners, to not collect charging information of the access user, for example, determines, according to the received first message, to not collect the charging information of the access user, all fall within the protection scope of the present invention, and the present invention is not limited to the scenario illustrated in this embodiment.

S402: The UGW-C sends an entry to the UGW-U, where the entry includes a charging policy.

It should be noted that, because the UGW-U performs no-charging processing, the sent entry may be

| | |
|---|---|
| Access user | |

or,

| | |
|---|---|
| Access user | Call duration |

In this way, the UGW-U can determine the charging policy according to the received entry, so as to obtain charging information according to the charging policy, for example, collect the call duration of the access user.

S403: The UGW-U receives the entry and parses a content of the entry, and determines to perform no-charging processing.

It should be noted that, performing no-charging processing may include measuring charging information of no-charging, for example, measuring free call duration, and performing no-charging processing may be not performing processing, that is, not measuring free calls or free network traffic of the access user.

S404: The UGW-U collects charging information of the access user according to the charging policy in the entry.

For example, the UGW-U measures the call duration such as local free incoming call according to the charging policy of no-charging processing in the entry. The charging policy is measuring local incoming call duration, and the UGW-U determines to perform no-charging processing, according to that the first role that the UGW-C plays is an SGW and the UGW-C is connected to a PGW through an S5 interface; or the UGW-U determines to perform no-charging processing, according to that the charging policy in the entry is empty; or the UGW-U determines to perform no-charging processing, according to that the charging policy is no-charging. The UGW-U sends a second message to the UGW-C.

S405: The UGW-U sends a second message carrying the charging information to the UGW-C.

For example, if the UGW-U measures the charging information of no-charging, the second message carries the measurement result; and if the UGW-U does not perform processing on the charging information of no-charging, the second message may be a response message, which merely notifies the UGW-C that the UGW-U has received the entry but does not measure the charging formation; or the UGW-U may not send a second message.

S406: The UGW-C receives the second message sent by the UGW-U.

It should be noted that, if the second message received by the UGW-C is a response message and does not carry the charging information, the UGW-C performs processing according to that the charging information is zero; if the second message received by the UGW-C carries the charging information and the charging information is 0, the UGW-C performs processing with the charging information being 0 as a charging result; and if the UGW-C does not receive the second message, the UGW-C still performs processing according to that the charging information is 0. However, because the UGW-C does not receive the second message, the UGW-C cannot determine whether the UGW-U does not send the second message or the UGW-U does not sent the second message in time, so the UGW-C generally does not process a no-charging situation according to that the second message is not sent. The method for the UGW-C to process the second message has been described in the foregoing embodiment, so details are not described herein again

According to the gateway charging method provided by the embodiment of the present invention, the UGW-C determines a charging policy of an access user, and sends a first message indicating the charging policy to the UGW-U; the UGW-U receives the first message, and then collects charging information according to the first message, and sends a second message carrying the charging information to the UGW-C; and the UGW-C receives the second message. In this way, the UGW-C can merely process the charging information and control the UGW-U, while the UGW-U can merely measure data and send a measurement result. Messages indicating required charging information and carrying the collected charging information are sent between the UGW-C and the UGW-U, so that multiple contents such as charging condition information and charging control information does not need to be transferred, thereby lowering transmission amount of charging information between two sub-gateway interfaces.

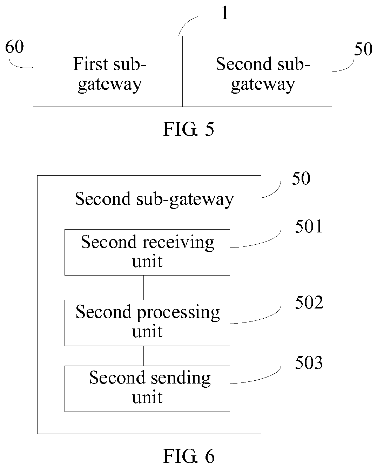

As shown in FIG. 5, a gateway 1 provided by an embodiment of the present invention includes a first sub-gateway 60 and a second sub-gateway 50. As shown in FIG. 6, the second sub-gateway 50 includes:
A second receiving unit 501 is configured to collect charging information of an access user according to a charging policy indicated by a first message.

It should be noted that, the first message may be an identifier indicating a charging policy that needs to be measured and corresponds to the access user in a preset charging policy, and may also be an entry including the access user and charging formation that needs to be measured and corresponds to the access user.

A second processing unit 502 is configured to collect charging information of the access user according to the charging policy indicated by the first message received by the second receiving unit 501.

For example, if the second receiving unit 501 receives the first message sent by the first sub-gateway 60, and the first message is an identifier corresponding to a charging policy in a first preset charging policy, where the first preset charging policy is set in the first sub-gateway 60, the second processing unit 502 may search a second preset charging policy for a charging policy according to the identifier received by the second receiving unit 501, and collect the charging information of the access user according to the charging policy, where the second preset charging policy is set in the second sub-gateway 50, and the charging policy in the first preset charging policy and the charging policy in the second preset charging policy correspond to the same identifier.

Alternatively, if the second receiving unit 501 receives the first message sent by the first sub-gateway 60, and the first message is an entry including a charging policy, the second processing unit 502 may collect the charging information of the access user according to the charging policy in the entry.

Alternatively, if the first message received by the second receiving unit 501 indicates that the charging policy of the access user is not performing charging or the first message received by the second receiving unit 501 does not indicating a charging policy, the second processing unit 502 does not collect the charging information of the access user.

A second sending unit 503 is configured to send a second message to the first sub-gateway 60, where the second information carries the charging information collected by the second processing unit 502.

Further, if the second processing unit 502 determines that a value of the collected charging information is greater than a preset threshold, the second sending unit 503 sends the second message to the first sub-gateway 60, where the second information carries the charging information.

The second sub-gateway 50 may work by adopting the method provided by the foregoing embodiment, and the working method is the same as that provided in the embodiment, so details are not described herein again.

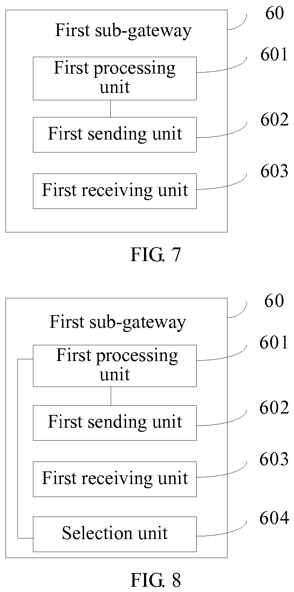

As shown in FIG. 7, the first sub-gateway 60 includes:
A first processing unit 601 is configured to determine a charging policy of an access user according to gateway configuration or information of the access user.

It should be noted that, the first sub-gateway 60 statically configures a charging policy corresponding to a user, a bearer and a service on the gateway 1 according to gateway configuration; or when a user and a service are activated, the first sub-gateway 60 obtains information of the access user in real time and determines the charging policy of the access user.

A first sending unit 602 is configured to send a first message to the second sub-gateway 50, where the first message indicates the charging policy determined by the first processing unit 601, so that the second sub-gateway 50 collects charging information according to the charging policy.

For example, the first sending unit 602 sends a first message to the second sub-gateway 50, where the first message is an identifier corresponding to a charging policy in a first preset charging policy, and the first preset charging policy is set in the first sub-gateway 60; or, the first sending unit 602 sends a first message to the second sub-gateway 50, where the first message is an entry including a charging policy.

A first receiving unit 603 is configured to receive a second message sent by the second sub-gateway 50, where the second information carries charging information.

Further, as shown in FIG. 8, the first sub-gateway 60 further includes the following unit:
A selection unit 604 is configured to, after according to user information of the access user, access network information and connection network information, the first processing unit 601 determines that the first sub-gateway 60 plays a first gateway role, select a second gateway role of the second sub-gateway 50 corresponding to the first gateway role determined by the first processing unit 601, so that the sending unit 602 sends a first message to the second gateway role of the second sub-gateway 50.

Further, if the first processing unit 601 determines that charging processing is not performed under the first gateway role and the second gateway role selected by the selection unit 604, the first message sent by the first sending unit 602 indicates that the charging policy of the access user is not performing charging, or the first message sent by the first sending unit 602 does not indicate a charging policy.

According to the gateway 1 provided by the embodiment of the present invention, the first sub-gateway 60 determines a charging policy of an access user, and sends a first message indicating the charging policy to the second sub-gateway 50; the second sub-gateway 50 receives the first message, and then collects charging information according to the first message, and sends a second message carrying the charging information to the first sub-gateway 60; and the first sub-gateway 60 receives the second message. In this way, the first sub-gateway 60 can merely process the charging information and control the second sub-gateway 50, while the second sub-gateway 50 can merely measure data and send a measurement result. Messages indicating required charging information and carrying the collected charging information are sent between the first sub-gateway 60 and the second sub-gateway 50, so that multiple contents such as charging condition information and charging control information does not need to be transferred, thereby lowering transmission amount of charging information between two sub-gateway interfaces.

The protection scope of the present invention is subject to the appended claims.

## Claims

1. A second sub-gateway (50) charging method, the method comprises:
receiving (101), by the second sub-gateway (50), a first message from a first sub-gateway (60), wherein the first message indicates a charging policy of an access user, wherein the second sub-gateway (50) is a forwarding plane gateway, the second sub-gateway (50) is for forwarding data and collecting charging information, and the first sub-gateway (60) is a control plane gateway;
collecting (102), by the second sub-gateway (50), charging information of the access user according to the charging policy indicated by the first message; and
sending (103), by the second sub-gateway (50), a second message to the first sub-gateway (60), wherein the second message carries the charging information.

2. The method according to claim 1, wherein the receiving, by the second sub-gateway (50), a first message sent by the first sub-gateway (60), wherein the first message indicates a charging policy of an access user; and the collecting, by the second sub-gateway (50), charging information of the access user according to the charging policy indicated by the first message comprise:
receiving, by the second sub-gateway (50), the first message sent by the first sub-gateway (60), wherein the first message is an identifier corresponding to the charging policy in a first preset charging policy, and the first preset charging policy is set in the first sub-gateway (60); and
searching, by the second sub-gateway (50), a second preset charging policy for the charging policy according to the identifier, and collecting the charging information of the access user according to the charging policy, wherein the second preset charging policy is set in the second sub-gateway (50), the charging policy in the first preset charging policy and the charging policy in the second preset charging policy correspond to the same identifier.

3. The method according to claim 1, wherein the receiving, by the second sub-gateway (50), a first message sent by the first sub-gateway (60), wherein the first message indicates a charging policy of an access user; and the collecting, by the second sub-gateway (50), charging information of the access user according to the charging policy indicated by the first message comprise:
receiving, by the second sub-gateway (50), the first message sent by the first sub-gateway (60), wherein the first message is an entry comprising the charging policy; and
collecting, by the second sub-gateway (50), the charging information of the access user according to the charging policy in the entry.

4. The method according to any one of claims 1 to 3, wherein the sending, by the second sub-gateway (50), a second message to the first sub-gateway (60), wherein the second message carries the charging information comprises:
if the second sub-gateway (50) determines that a value of the charging information is greater than a preset threshold, sending, by the second sub-gateway (50), the second message to the first sub-gateway (60), wherein the second message carries the charging information.

5. The method according to claim 1, wherein if the first message received by the second sub-gateway (50) indicates that the charging policy of the access user is no-charging or the first message received by the second sub-gateway (50) does not indicate a charging policy, the charging formation of the access user is not collected.

6. A first sub-gateway (60) charging method, wherein the method comprises:
determining (201), by the first sub-gateway (60), a charging policy of an access user according to gateway configuration or information of the access user, wherein the first sub-gateway (60) is a control plane gateway;
sending (202), by the first sub-gateway (60), a first message to a second sub-gateway (50), wherein the first message indicates the charging policy, wherein the second sub-gateway (50) is a forwarding plane gateway, the second sub-gateway (50) is for forwarding data and collecting charging information; and
receiving (203), by the first sub-gateway (60), a second message from the second sub-gateway (50), wherein the second message carries the charging information, wherein charging information is collected according to the charging policy.

7. The method according to claim 6, wherein the sending, by the first sub-gateway (60), a first message to the second sub-gateway (50), wherein the first message indicates the charging policy of the access user comprises:
sending, by the first sub-gateway (60), the first message to the second sub-gateway (50), wherein the first message is an identifier corresponding to the charging policy in a first preset charging policy, and the first preset charging policy is set in the first sub-gateway (60).

8. The method according to claim 6, wherein the sending, by the first sub-gateway (60), a first message to the second sub-gateway (50), wherein the first message indicates the charging policy of the access user comprises:
sending, by the first sub-gateway (60), the first message to the second sub-gateway (50), wherein the first message is an entry comprising the charging policy.

9. The method according to claim 6, before the sending, by the first sub-gateway (60), a first message indicating the charging policy of the access user to the second sub-gateway (50), further comprising:
according to user information of the access user, access network information and connection network information, determining, by the first sub-gateway (60), that the first sub-gateway (60) plays a first gateway role.

10. The method according to claim 9, wherein the sending, by the first sub-gateway (60), a first message to the second sub-gateway (50) comprises:
selecting, by the first sub-gateway (60), a second gateway role of the second sub-gateway (50) corresponding to the first gateway role; and
sending, by the first sub-gateway (60), the first message to the second gateway role of the second sub-gateway (50).

11. A second sub-gateway (50), wherein the second sub-gateway (50) is a forwarding plane gateway, and the second sub-gateway (50) is configured to forward data and collect charging information, and the second sub-gateway (50) comprises:
a second receiving unit (501), configured to receive a first message from a first sub-gateway (60), wherein the first message indicates a charging policy of an access user, and the first sub-gateway (60) is a control plane gateway;
a second processing unit (502), configured to collect charging information of the access user according to the charging policy indicated by the first message; and
a second sending unit (503), configured to send a second message to the first sub-gateway (60), wherein the second message carries the charging information collected by the second processing unit.

12. The second sub-gateway (50) according to claim 11, wherein the first message is an identifier corresponding to the charging policy in a first preset charging policy, and the first preset charging policy is set in the first sub-gateway (60);
wherein the second processing unit (502) is specifically configured to search a second preset charging policy for the charging policy according to the identifier, and collect the charging information of the access user according to the charging policy, wherein the second preset charging policy is set in the second sub-gateway (50), the charging policy in the first preset charging policy and the charging policy in the second preset charging policy correspond to the same identifier.

13. The second sub-gateway (50) according to claim 11, wherein the first message is an entry comprising the charging policy;
wherein the second processing unit (502) is specifically configured to collect the charging information of the access user according to the charging policy in the entry.

14. A first sub-gateway (60), wherein the first sub-gateway (60) is configured to process a charging policy and control a second sub-gateway (50), wherein the first sub-gateway (60) is a control plane gateway, the second sub-gateway (50) is a forwarding plane gateway, and the first sub-gateway (60) comprises:
a first processing unit (601), configured to determine a charging policy of an access user according to gateway configuration or information of the access user;
a first sending unit (602), configured to send a first message to the second sub-gateway (50), wherein the first message indicates the charging policy determined by the first processing unit; and
a first receiving unit (603), configured to receive a second message sent by the second sub-gateway (50), wherein the second message carries the charging information, wherein charging information is collected according to the charging policy.

15. The first sub-gateway (60) according to claim 14, wherein the first sending unit (602) is specifically configured to send the first message to the second sub-gateway (50), wherein the first message is an identifier corresponding to the charging policy in a first preset charging policy, and the first preset charging policy is set in the first sub-gateway (60).

16. The first sub-gateway (60) according to claim 14, wherein the first sending unit (602) is specifically configured to send the first message to the second sub-gateway (50), wherein the first message is an entry comprising the charging policy.

17. A charging system, comprising the first sub-gateway (60) according to claim 14 and the second sub-gateway (50) according to claim 11, wherein the first sub-gateway (60) is configured to process the charging policy and control the second sub-gateway (50), and the second sub-gateway (50) is configured to forward data and collect charging information,
wherein the first sub-gateway (60) is configured to send the first message to the first sub-gateway (60), wherein the first message indicates the charging policy of the access user;
wherein the second sub-gateway (50) is configured to receive the first message from the first sub-gateway (60); collect charging information of the access user according to the charging policy indicated by the first message; and send the second message to the first sub-gateway (60), wherein the second message carries the charging information; and
wherein the first sub-gateway (60) is configured to receive the second message from the second sub-gateway (50).

18. The charging system according to claim 17, wherein the first message is an identifier corresponding to the charging policy in a first preset charging policy, and the first preset charging policy is set in the first sub-gateway (60);
wherein the second sub-gateway (50) is specifically configured to search a second preset charging policy for the charging policy according to the identifier, and collect the charging information of the access user according to the charging policy, wherein the second preset charging policy is set in the second sub-gateway (50), the charging policy in the first preset charging policy and the charging policy in the second preset charging policy correspond to the same identifier.

19. The charging system according to claim 17, wherein the first message is an entry comprising the charging policy;
wherein the second sub-gateway (50) is specifically configured to collect the charging information of the access user according to the charging policy in the entry.

20. A charging method comprising all method steps of the first sub-gateway (60) charging method according to claim 6 and of the second sub-gateway (50) charging method according to claim 1.

21. The charging method according to claim 20, wherein the first message is an identifier corresponding to the charging policy in a first preset charging policy, and the first preset charging policy is set in the first sub-gateway (60);
wherein the collecting step comprises:
searching, by the second sub-gateway (50), a second preset charging policy for the charging policy according to the identifier, and collecting the charging information of the access user according to the charging policy, wherein the second preset charging policy is set in the second sub-gateway (50), the charging policy in the first preset charging policy and the charging policy in the second preset charging policy correspond to the same identifier.

22. The charging method according to claim 20, wherein the first message is an entry comprising the charging policy;
wherein the collecting step comprises:
collecting, by the second sub-gateway (50), the charging information of the access user according to the charging policy in the entry.

## Patentansprüche

1. Abrechnungsverfahren eines zweiten Sub-Gateways (50), wobei das Verfahren Folgendes umfasst:
Empfangen (101) durch das zweite Sub-Gateway (50) einer ersten Nachricht von einem ersten Sub-Gateway (60), wobei die erste Nachricht eine Abrechnungsrichtlinie eines Zugangsnutzers angibt, wobei das zweite Sub-Gateway (50) ein Weiterleitungsebenen-Gateway ist, das zweite Sub-Gateway (50) zum Weiterleiten von Daten und Sammeln von Abrechnungsinformationen dient und das erste Sub-Gateway (60) ein Steuerebenen-Gateway ist;
Sammeln (102) durch das zweite Sub-Gateway (50) von Abrechnungsinformationen des Zugangsnutzers gemäß der Abrechnungsrichtlinie, die durch die erste Nachricht angegeben wird; und
Senden (103) durch das zweite Sub-Gateway (50) einer zweiten Nachricht an das erste Sub-Gateway (60), wobei die zweite Nachricht die Abrechnungsinformationen führt.

2. Verfahren nach Anspruch 1, wobei das Empfangen durch das zweite Sub-Gateway (50) einer durch das erste Sub-Gateway (60) gesendeten ersten Nachricht, wobei die erste Nachricht eine Abrechnungsrichtlinie eines Zugangsnutzers angibt; und das Sammeln durch das zweite Sub-Gateway (50) von Abrechnungsinformationen des Zugangsnutzers gemäß der Abrechnungsrichtlinie, die durch die erste Nachricht angegeben wird, Folgendes umfasst:
Empfangen durch das zweite Sub-Gateway (50) der durch das erste Sub-Gateway (60) gesendeten ersten Nachricht, wobei die erste Nachricht eine Kennung ist, die der Abrechnungsrichtlinie in einer ersten voreingestellten Abrechnungsrichtlinie entspricht, und die erste voreingestellte Abrechnungsrichtlinie in dem ersten Sub-Gateway (60) eingestellt wird; und
Suchen durch das zweite Sub-Gateway (50) nach einer zweiten voreingestellten Abrechnungsrichtlinie für die Abrechnungsrichtlinie gemäß der Kennung und Sammeln der Abrechnungsinformationen des Zugangsnutzers gemäß der Abrechnungsrichtlinie, wobei die zweite voreingestellte Abrechnungsrichtlinie in dem zweiten Sub-Gateway (50) eingestellt wird, wobei die Abrechnungsrichtlinie in der ersten voreingestellten Abrechnungsrichtlinie und die Abrechnungsrichtlinie in der zweiten voreingestellten Abrechnungsrichtlinie der gleichen Kennung entsprechen.

3. Verfahren nach Anspruch 1, wobei das Empfangen durch das zweite Sub-Gateway (50) einer durch das erste Sub-Gateway (60) gesendeten ersten Nachricht, wobei die erste Nachricht eine Abrechnungsrichtlinie eines Zugangsnutzers angibt; und das Sammeln durch das zweite Sub-Gateway (50) von Abrechnungsinformationen des Zugangsnutzers gemäß der Abrechnungsrichtlinie, die durch die erste Nachricht angegeben wird, Folgendes umfassen:
Empfangen durch das zweite Sub-Gateway (50) der durch das erste Sub-Gateway (60) gesendeten ersten Nachricht, wobei die erste Nachricht ein Eintrag ist, der die Abrechnungsrichtlinie umfasst; und
Sammeln durch das zweite Sub-Gateway (50) der Abrechnungsinformationen des Zugangsnutzers gemäß der Abrechnungsrichtlinie in dem Eintrag.

4. Verfahren nach einem der Ansprüche 1 bis 3, wobei das Senden durch das zweite Sub-Gateway (50) einer zweiten Nachricht an das erste Sub-Gateway (60), wobei die zweite Nachricht die Abrechnungsinformationen führt, Folgendes umfasst:
falls das zweite Sub-Gateway (60) bestimmt, dass ein Wert der Abrechnungsinformationen größer als ein voreingestellter Schwellenwert ist, Senden durch das zweite Sub-Gateway (50) der zweiten Nachricht an das erste Sub-Gateway (60), wobei die zweite Nachricht die Abrechnungsinformationen führt.

5. Verfahren nach Anspruch 1, wobei, falls die durch das zweite Sub-Gateway (50) empfangene erste Nachricht angibt, dass die Abrechnungsrichtlinie des Zugangsnutzers Nichtabrechnung ist, oder die durch das zweite Sub-Gateway (50) empfangene erste Nachricht keine Abrechnungsrichtlinie angibt, die Abrechnungsinformationen des Zugangsnutzers nicht gesammelt werden.

6. Abrechnungsverfahren eines ersten Sub-Gateways (60), wobei das Verfahren Folgendes umfasst:
Bestimmen (201), durch das erste Sub-Gateway (60), einer Abrechnungsrichtlinie eines Zugangsnutzers gemäß einer Gateway-Konfiguration oder Informationen des Zugangsnutzers, wobei das erste Sub-Gateway (60) ein Steuerungsebenen-Gateway ist;
Senden (202), durch das erste Sub-Gateway (60), einer ersten Nachricht an ein zweites Sub-Gateway (50), wobei die erste Nachricht die Abrechnungsrichtlinie angibt, wobei das zweite Sub-Gateway (50) ein Weiterleitungsebenen-Gateway ist, wobei das zweite Sub-Gateway (50) zum Weiterleiten von Daten und Sammeln von Abrechnungsinformationen dient; und
Empfangen (203), durch das erste Sub-Gateway (60), einer zweiten Nachricht von dem zweiten Sub-Gateway (50), wobei die zweite Nachricht die Abrechnungsinformationen führt, wobei die Abrechnungsinformationen gemäß der Abrechnungsrichtlinie gesammelt werden.

7. Verfahren nach Anspruch 6, wobei das Senden, durch das erste Sub-Gateway (60), einer ersten Nachricht an das zweite Sub-Gateway (50), wobei die erste Nachricht die Abrechnungsrichtlinie des Zugangsnutzers angibt, Folgendes umfasst:
Senden, durch das erste Sub-Gateway (60), der ersten Nachricht an das zweite Sub-Gateway (50), wobei die erste Nachricht eine Kennung ist, die der Abrechnungsrichtlinie in einer ersten voreingestellten Abrechnungsrichtlinie entspricht, und die erste voreingestellte Abrechnungsrichtlinie in dem ersten Sub-Gateway (60) eingestellt wird.

8. Verfahren nach Anspruch 6, wobei das Senden, durch das erste Sub-Gateway (60), einer ersten Nachricht an das zweite Sub-Gateway (50), wobei die erste Nachricht die Abrechnungsrichtlinie des Zugangsnutzers angibt, Folgendes umfasst:
Senden, durch das erste Sub-Gateway (60), der ersten Nachricht an das zweite Sub-Gateway (50), wobei die erste Nachricht ein Eintrag ist, der die Abrechnungsrichtlinie umfasst.

9. Verfahren nach Anspruch 6, das vor dem Senden, durch das erste Sub-Gateway (60), einer ersten Nachricht, die die Abrechnungsrichtlinie des Zugangsnutzers angibt, an das zweite Sub-Gateway (50) ferner Folgendes umfasst:
gemäß Benutzerinformationen des Zugangsnutzers, Zugangsnetzinformationen und Verbindungsnetzinformationen, Bestimmen, durch das erste Sub-Gateway (60), dass das erste Sub-Gateway (60) eine erste Gateway-Rolle spielt.

10. Verfahren nach Anspruch 9, wobei das Senden, durch das erste Sub-Gateway (60), einer ersten Nachricht an das zweite Sub-Gateway (50) Folgendes umfasst:
Auswählen, durch das erste Sub-Gateway (60), einer zweiten Gateway-Rolle des zweiten Sub-Gateways (50) entsprechend der ersten Gateway-Rolle; und
Senden, durch das erste Sub-Gateway (60), der ersten Nachricht an die zweite Gateway-Rolle des zweiten Sub-Gateways (50).

11. Zweites Sub-Gateway (50), wobei das zweite Sub-Gateway (50) ein Weiterleitungsebenen-Gateway ist und das zweite Sub-Gateway (50) konfiguriert ist, Daten weiterzuleiten und Abrechnungsinformationen zu sammeln, und das zweite Sub-Gateway (50) Folgendes umfasst:
eine zweite Empfangseinheit (501), die konfiguriert ist, eine erste Nachricht von einem ersten Sub-Gateway (60) zu empfangen, wobei die erste Nachricht eine Abrechnungsrichtlinie eines Zugangsnutzers angibt und das erste Sub-Gateway (60) ein Steuerebenen-Gateway ist;
eine zweite Verarbeitungseinheit (502), die konfiguriert ist, Abrechnungsinformationen des Zugangsnutzers gemäß der Abrechnungsrichtlinie, die durch die erste Nachricht angegeben wird, zu sammeln; und
eine zweite Sendeeinheit (503), die konfiguriert ist, eine zweite Nachricht an das erste Sub-Gateway (60) zu senden, wobei die zweite Nachricht die durch die zweite Verarbeitungseinheit gesammelten Abrechnungsinformationen führt.

12. Zweites Sub-Gateway (50) nach Anspruch 11, wobei die erste Nachricht eine Kennung ist, die der Abrechnungsrichtlinie in einer ersten voreingestellten Abrechnungsrichtlinie entspricht, und die erste voreingestellte Abrechnungsrichtlinie in dem ersten Sub-Gateway (60) eingestellt wird;
wobei die zweite Verarbeitungseinheit (502) spezifisch konfiguriert ist, nach einer zweiten voreingestellten Abrechnungsrichtlinie für die Abrechnungsrichtlinie gemäß der Kennung zu suchen und die Abrechnungsinformationen des Zugangsnutzers gemäß der Abrechnungsrichtlinie zu sammeln, wobei die zweite voreingestellte Abrechnungsrichtlinie in dem zweiten Sub-Gateway (50) eingestellt wird, wobei die Abrechnungsrichtlinie in der ersten voreingestellten Abrechnungsrichtlinie und die Abrechnungsrichtlinie in der zweiten voreingestellten Abrechnungsrichtlinie der gleichen Kennung entsprechen.

13. Zweites Sub-Gateway (50) nach Anspruch 11, wobei die erste Nachricht ein Eintrag ist, der die Abrechnungsrichtlinie umfasst;
wobei die zweite Verarbeitungseinheit (502) spezifisch konfiguriert ist, die Abrechnungsinformationen des Zugangsnutzers gemäß der Abrechnungsrichtlinie in dem Eintrag zu sammeln.

14. Erstes Sub-Gateway (60), wobei das erste Sub-Gateway (60) konfiguriert ist, eine Abrechnungsrichtlinie zu verarbeiten und ein zweites Sub-Gateway (50) zu steuern, wobei das erste Sub-Gateway (60) ein Steuerebenen-Gateway ist, das zweite Sub-Gateway (50) ein Weiterleitungsebenen-Gateway ist und das erste Sub-Gateway (60) Folgendes umfasst:
eine erste Verarbeitungseinheit (601), die konfiguriert ist, eine Abrechnungsrichtlinie eines Zugangsnutzers gemäß einer Gateway-Konfiguration oder Informationen des Zugangsnutzers zu bestimmen;
eine erste Sendeeinheit (602), die konfiguriert ist, eine erste Nachricht an das zweite Sub-Gateway (50) zu senden, wobei die erste Nachricht die durch die erste Verarbeitungseinheit bestimmte Abrechnungsrichtlinie angibt; und
eine erste Empfangseinheit (603), die konfiguriert ist, eine durch das zweite Sub-Gateway (50) gesendete zweite Nachricht zu empfangen, wobei die zweite Nachricht die Abrechnungsinformationen führt, wobei Abrechnungsinformationen gemäß der Abrechnungsrichtlinie gesammelt werden.

15. Erstes Sub-Gateway (60) nach Anspruch 14, wobei die erste Sendeeinheit (602) spezifisch konfiguriert ist, die erste Nachricht an das zweite Sub-Gateway (50) zu senden, wobei die erste Nachricht eine Kennung ist, die der Abrechnungsrichtlinie in einer ersten voreingestellten Abrechnungsrichtlinie entspricht, und die erste voreingestellte Abrechnungsrichtlinie in dem ersten Sub-Gateway (60) eingestellt wird.

16. Erstes Sub-Gateway (60) nach Anspruch 14, wobei die erste Sendeeinheit (602) spezifisch konfiguriert ist, die erste Nachricht an das zweite Sub-Gateway (50) zu senden, wobei die erste Nachricht ein Eintrag ist, der die Abrechnungsrichtlinie umfasst.

17. Abrechnungssystem, das das erste Sub-Gateway (60) nach Anspruch 14 und das zweite Sub-Gateway (50) nach Anspruch 11 umfasst, wobei das erste Sub-Gateway (60) konfiguriert ist, die Abrechnungsrichtlinie zu verarbeiten und das zweite Sub-Gateway (50) zu steuern, und das zweite Sub-Gateway (50) konfiguriert ist, Daten weiterzuleiten und Abrechnungsinformationen zu sammeln,
wobei das erste Sub-Gateway (60) konfiguriert ist, die erste Nachricht an das erste Sub-Gateway (60) zu senden, wobei die erste Nachricht die Abrechnungsrichtlinie des Zugangsnutzers angibt;
wobei das zweite Sub-Gateway (50) konfiguriert ist, die erste Nachricht von dem ersten Sub-Gateway (60) zu empfangen; Abrechnungsinformationen des Zugangsnutzers gemäß der durch die erste Nachricht angegebenen Abrechnungsrichtlinie zu sammeln; und die zweite Nachricht an das erste Sub-Gateway (60) zu senden, wobei die zweite Nachricht die Abrechnungsinformationen führt; und
wobei das erste Sub-Gateway (60) konfiguriert ist, die zweite Nachricht von dem zweiten Sub-Gateway (50) zu empfangen.

18. Abrechnungssystem nach Anspruch 17, wobei die erste Nachricht eine Kennung ist, die der Abrechnungsrichtlinie in einer ersten voreingestellten Abrechnungsrichtlinie entspricht, und die erste voreingestellte Abrechnungsrichtlinie in dem ersten Sub-Gateway (60) eingestellt wird;
wobei das zweite Sub-Gateway (50) spezifisch konfiguriert ist, nach einer zweiten voreingestellten Abrechnungsrichtlinie für die Abrechnungsrichtlinie gemäß der Kennung zu suchen und die Abrechnungsinformationen des Zugangsnutzers gemäß der Abrechnungsrichtlinie zu sammeln, wobei die zweite voreingestellte Abrechnungsrichtlinie in dem zweiten Sub-Gateway (50) eingestellt wird, wobei die Abrechnungsrichtlinie in der ersten voreingestellten Abrechnungsrichtlinie und die Abrechnungsrichtlinie in der zweiten voreingestellten Abrechnungsrichtlinie der gleichen Kennung entsprechen.

19. Abrechnungssystem nach Anspruch 17, wobei die erste Nachricht ein Eintrag ist, der die Abrechnungsrichtlinie umfasst;
wobei das zweite Sub-Gateway (50) spezifisch konfiguriert ist, die Abrechnungsinformationen des Zugangsnutzers gemäß der Abrechnungsrichtlinie in dem Eintrag zu sammeln.

20. Abrechnungsverfahren, das alle Verfahrensschritte des Abrechnungsverfahrens des ersten Sub-Gateway (60) nach Anspruch 6 und des Abrechnungsverfahrens des zweiten Sub-Gateway (50) nach Anspruch 1 umfasst.

21. Abrechnungsverfahren nach Anspruch 20, wobei die erste Nachricht eine Kennung ist, die der Abrechnungsrichtlinie in einer ersten voreingestellten Abrechnungsrichtlinie entspricht, und die erste voreingestellte Abrechnungsrichtlinie in dem ersten Sub-Gateway (60) eingestellt wird;
wobei der Sammelschritt Folgendes umfasst:
Suchen durch das zweite Sub-Gateway (50) nach einer zweiten voreingestellten Abrechnungsrichtlinie für die Abrechnungsrichtlinie gemäß der Kennung und Sammeln der Abrechnungsinformationen des Zugangsnutzers gemäß der Abrechnungsrichtlinie, wobei die zweite voreingestellte Abrechnungsrichtlinie in dem zweiten Sub-Gateway (50) eingestellt wird, wobei die Abrechnungsrichtlinie in der ersten voreingestellten Abrechnungsrichtlinie und die Abrechnungsrichtlinie in der zweiten voreingestellten Abrechnungsrichtlinie der gleichen Kennung entsprechen.

22. Abrechnungsverfahren nach Anspruch 20, wobei die erste Nachricht ein Eintrag ist, der die Abrechnungsrichtlinie umfasst;
wobei der Sammelschritt Folgendes umfasst:
Sammeln durch das zweite Sub-Gateway (50) der Abrechnungsinformationen des Zugangsnutzers gemäß der Abrechnungsrichtlinie in dem Eintrag.

## Revendications

1. Deuxième procédé de facturation de sous-passerelle (50), le procédé comprenant :
la réception (101), par la deuxième sous-passerelle (50), d'un premier message provenant d'une première sous-passerelle (60), le premier message indiquant une politique de facturation d'un utilisateur d'accès, la deuxième sous-passerelle (50) étant une passerelle de plan de transfert, la deuxième sous-passerelle (50) étant destinée au transfert de données et à la collecte d'informations de facturation, et la première sous-passerelle (60) étant une passerelle de plan de commande ;
la collecte (102), par la deuxième sous-passerelle (50), d'informations de facturation de l'utilisateur d'accès selon la politique de facturation indiquée par le premier message ; et
l'envoi (103), par la deuxième sous-passerelle (50), d'un deuxième message à la première sous-passerelle (60), le deuxième message comportant les informations de facturation.

2. Procédé selon la revendication 1, dans lequel la réception, par la deuxième sous-passerelle (50), d'un premier message envoyé par la première sous-passerelle (60), le premier message indiquant une politique de facturation d'un utilisateur d'accès ; et la collecte, par la deuxième sous-passerelle (50), d'informations de facturation de l'utilisateur d'accès selon la politique de facturation indiquée par le premier message, comprennent :
la réception, par la deuxième sous-passerelle (50), du premier message envoyé par la première sous-passerelle (60), le premier message étant un identifiant correspondant à la politique de facturation dans une première politique de facturation prédéfinie, et la première politique de facturation étant définie dans la première sous-passerelle (60) ; et
la recherche, par la deuxième sous-passerelle (50), d'une deuxième politique de facturation prédéfinie pour la politique de facturation selon l'identifiant, et la collecte des informations de facturation de l'utilisateur d'accès selon la politique de facturation, la deuxième politique de facturation prédéfinie étant définie dans la deuxième sous-passerelle (50), la politique de facturation dans la première politique de facturation prédéfinie et la politique de facturation dans la deuxième politique de facturation prédéfinie correspondant au même identifiant.

3. Procédé selon la revendication 1, dans lequel la réception, par la deuxième sous-passerelle (50), d'un premier message envoyé par la première sous-passerelle (60), le premier message indiquant une politique de facturation d'un utilisateur d'accès ; et la collecte, par la deuxième sous-passerelle (50), d'informations de facturation de l'utilisateur d'accès selon la politique de facturation indiquée par le premier message, comprennent :
la réception, par la deuxième sous-passerelle (50), du premier message envoyé par la première sous-passerelle (60), le premier message étant une saisie comprenant la politique de facturation ; et
la collecte, par la deuxième sous-passerelle (50), des informations de facturation de l'utilisateur d'accès selon la politique de facturation dans la saisie.

4. Procédé selon l'une quelconque des revendications 1 à 3, dans lequel l'envoi, par la deuxième sous-passerelle (50), d'un deuxième message à la première sous-passerelle (60), le deuxième message comportant les informations de facturation, comprend :
si la deuxième sous-passerelle (50) détermine qu'une valeur des informations de facturation est supérieure à un seuil prédéfini, l'envoi, par la deuxième sous-passerelle (50), du deuxième message à la première sous-passerelle (60), le deuxième message comportant les informations de facturation.

5. Procédé selon la revendication 1, dans lequel si le premier message reçu par la deuxième sous-passerelle (50) indique que la politique de facturation de l'utilisateur d'accès est de non-facturation ou que le premier message reçu par la deuxième sous-passerelle (50) n'indique pas une politique de facturation, les informations de facturation de l'utilisateur d'accès ne sont pas collectées.

6. Procédé de facturation de première sous-passerelle (60), le procédé comprenant :
la détermination (201), par la première sous-passerelle (60), d'une politique de facturation d'un utilisateur d'accès selon une configuration de passerelle ou d'informations de l'utilisateur d'accès, la première sous-passerelle (60) étant une passerelle de plan de commande ;
l'envoi (202), par la première sous-passerelle (60), d'un premier message à une deuxième sous-passerelle (50), le premier message indiquant la politique de facturation, la deuxième sous-passerelle (50) étant une passerelle de plan de transfert, la deuxième sous-passerelle (50) étant destinée au transfert de données et à la collecte d'informations de facturation ; et
la réception (203), par la première sous-passerelle (60), d'un deuxième message provenant de la deuxième sous-passerelle (50), le deuxième message comportant les informations de facturation, les informations de facturation étant collectées selon la politique de facturation.

7. Procédé selon la revendication 6, dans lequel l'envoi, par la première sous-passerelle (60), d'un premier message à la deuxième sous-passerelle (50), le premier message indiquant la politique de facturation de l'utilisateur d'accès, comprend :
l'envoi, par la première sous-passerelle (60), du premier message à la deuxième sous-passerelle (50), le premier message étant un identifiant correspondant à la politique de facturation dans une première politique de facturation prédéfinie, et la première politique de facturation étant définie dans la première sous-passerelle (60).

8. Procédé selon la revendication 6, dans lequel l'envoi, par la première sous-passerelle (60), d'un premier message à la deuxième sous-passerelle (50), le premier message indiquant la politique de facturation de l'utilisateur d'accès, comprend :
l'envoi, par la première sous-passerelle (60), du premier message à la deuxième sous-passerelle (50), le premier message étant une saisie comprenant la politique de facturation.

9. Procédé selon la revendication 6, avant l'envoi, par la première sous-passerelle (60), d'un premier message indiquant la politique de facturation de l'utilisateur d'accès à la deuxième sous-passerelle (50), comprenant en outre :
selon des informations d'utilisateur de l'utilisateur d'accès, des informations de réseau d'accès et des informations de réseau de connexion, la détermination, par la première sous-passerelle (60), que la première sous-passerelle (60) joue un rôle de première passerelle.

10. Procédé selon la revendication 9, dans lequel l'envoi, par la première sous-passerelle (60), d'un premier message à la deuxième sous-passerelle (50) comprend :
la sélection, par la première sous-passerelle (60), d'un rôle de deuxième passerelle de la deuxième sous-passerelle (50) correspondant au rôle de première passerelle ; et
l'envoi, par la première sous-passerelle (60), du premier message au rôle de deuxième passerelle de la deuxième sous-passerelle (50).

11. Deuxième sous-passerelle (50), la deuxième sous-passerelle (50) étant une passerelle de plan de transfert, et la deuxième sous-passerelle (50) étant configurée pour transférer des données et collecter des informations de facturation, et la deuxième sous-passerelle (50) comprenant :
une deuxième unité de réception (501), configurée pour recevoir un premier message d'une première sous-passerelle (60), le premier message indiquant une politique de facturation d'un utilisateur d'accès, et la première sous-passerelle (60) étant une passerelle de plan de commande ;
une deuxième unité de traitement (502), configurée pour collecter des informations de facturation de l'utilisateur d'accès selon la politique de facturation indiquée par le premier message ; et
une deuxième unité d'envoi (503), configurée pour envoyer un deuxième message à la première sous-passerelle (60), le deuxième message comportant les informations de facturation collectées par la deuxième unité de traitement.

12. Deuxième sous-passerelle (50) selon la revendication 11, dans laquelle le premier message est un identifiant correspondant à la politique de facturation dans une première politique de facturation prédéfinie, et la première politique de facturation prédéfinie est définie dans la première sous-passerelle (60) ;
la deuxième unité de traitement (502) étant spécifiquement configurée pour rechercher une deuxième politique de facturation prédéfinie pour la politique de facturation selon l'identifiant, et collecter les informations de facturation de l'utilisateur d'accès selon la politique de facturation, la deuxième politique de facturation prédéfinie étant définie dans la deuxième sous-passerelle (50), la politique de facturation dans la première politique de facturation prédéfinie et la politique de facturation dans la deuxième politique de facturation prédéfinie correspondant au même identifiant.

13. Deuxième sous-passerelle (50) selon la revendication 11, dans laquelle le premier message est une entrée comprenant la politique de facturation ;
dans laquelle la deuxième unité de traitement (502) est spécifiquement configurée pour collecter les informations de facturation de l'utilisateur d'accès selon la politique de facturation dans l'entrée.

14. Première sous-passerelle (60), la première sous-passerelle (60) étant configurée pour traiter une politique de facturation et commander une deuxième sous-passerelle (50), la première sous-passerelle (60) étant une passerelle de plan de commande, la deuxième sous-passerelle (50) étant une passerelle de plan de transfert, et la première sous-passerelle (60) comprenant :
une première unité de traitement (601), configurée pour déterminer une politique de facturation d'un utilisateur d'accès selon une configuration de passerelle ou des informations de l'utilisateur d'accès ;
une première unité d'envoi (602), configurée pour envoyer un premier message à la deuxième sous-passerelle (50), le premier message indiquant les informations de facturation déterminées par la première unité de traitement ; et
une première unité de réception (603), configurée pour recevoir un deuxième message envoyé par la deuxième sous-passerelle (50), le deuxième message comportant les informations de facturation, les informations de facturation étant collectées selon la politique de facturation.

15. Première sous-passerelle (60) selon la revendication 14, dans laquelle la première unité d'envoi (602) est spécifiquement configurée pour envoyer le premier message à la deuxième sous-passerelle (50), le premier message étant un identifiant correspondant à la politique de facturation dans une première politique de facturation prédéfinie, et la première politique de facturation prédéfinie étant définie dans la première sous-passerelle (60).

16. Première sous-passerelle (60) selon la revendication 14, dans laquelle la première unité d'envoi (602) est spécifiquement configurée pour envoyer le premier message à la deuxième sous-passerelle (50), le premier message étant une entrée comprenant la politique de facturation.

17. Système de facturation, comprenant la première sous-passerelle (60) selon la revendication 14 et la deuxième sous-passerelle (50) selon la revendication 11, la première sous-passerelle (60) étant configurée pour traiter une politique de facturation et pour commander la deuxième sous-passerelle (50), et la deuxième sous-passerelle (50) étant configurée pour transmettre des données et pour collecter des informations de facturation,
dans lequel la première sous-passerelle (60) est configurée pour envoyer un premier message à la première sous-passerelle (60), le premier message indiquant une politique de facturation de l'utilisateur d'accès ;
la deuxième sous-passerelle (50) étant configurée pour recevoir le premier message de la première sous-passerelle (60) ; collecter des informations de facturation de l'utilisateur d'accès selon la politique de facturation indiquée par le premier message ; et envoyer le deuxième message à la première sous-passerelle (60), le deuxième message comportant les informations de facturation ; et
la première sous-passerelle (60) étant configurée pour recevoir le deuxième message de la deuxième sous-passerelle (50).

18. Système de facturation selon la revendication 17, dans lequel le premier message est un identifiant correspondant à la politique de facturation dans une première politique de facturation prédéfinie, et la première politique de facturation prédéfinie est définie dans la première sous-passerelle (60) ;
la deuxième sous-passerelle (50) étant spécifiquement configurée pour rechercher une deuxième politique de facturation prédéfinie pour la politique de facturation selon l'identifiant, et collecter les informations de facturation de l'utilisateur d'accès selon la politique de facturation, la deuxième politique de facturation prédéfinie étant définie dans la deuxième sous-passerelle (50), la politique de facturation dans la première politique de facturation prédéfinie et la politique de facturation dans la deuxième politique de facturation prédéfinie correspondant au même identifiant.

19. Système de facturation (50) selon la revendication 17, dans lequel le premier message est une entrée comprenant la politique de facturation ;
dans lequel la deuxième sous-passerelle (50) est spécifiquement configurée pour collecter les informations de facturation de l'utilisateur d'accès selon la politique de facturation dans l'entrée.

20. Procédé de facturation comprenant toutes les étapes de procédé du premier procédé de facturation de sous-passerelle (60) selon la revendication 6 et du deuxième procédé de facturation de sous-passerelle (50) selon la revendication 1.

21. Procédé de facturation selon la revendication 20, dans lequel le premier message est un identifiant correspondant à la politique de facturation dans une première politique de facturation prédéfinie, et la première politique de facturation prédéfinie est définie dans la première sous-passerelle (60) ;
dans lequel l'étape de collecte comprend :
la recherche, par la deuxième sous-passerelle (50), d'une deuxième politique de facturation prédéfinie pour la politique de facturation selon l'identifiant, et la collecte des informations de facturation de l'utilisateur d'accès selon la politique de facturation, la deuxième politique de facturation prédéfinie étant définie dans la deuxième sous-passerelle (50), la politique de facturation dans la première politique de facturation prédéfinie et la politique de facturation dans la deuxième politique de facturation prédéfinie correspondant au même identifiant.

22. Procédé de facturation (50) selon la revendication 20, dans lequel le premier message est une entrée comprenant la politique de facturation ;
dans lequel l'étape de collecte comprend :
la collecte, par la deuxième sous-passerelle (50), des informations de facturation de l'utilisateur d'accès selon la politique de facturation dans la saisie.
